# EUROPÄISCHE PATENTSCHRIFT

(11) **EP 1 448 881 B1**
(45) Veröffentlichungstag und Bekanntmachung des Hinweises auf die Patenterteilung: **06.04.2005**
(21) Anmeldenummer: 02774734.4
(22) Anmeldetag: 19.10.2002
(51) Int. Cl.: F02D 33/02, F01L 13/00, F02D 41/34, F02D 13/00, F02D 13/02, F01L 1/34

(54) **VERFAHREN UND VORRICHTUNG ZUM GLEICHTSTELLEN DER FÜLLUNG DER ZYLINDER EINES MEHRZYLINDRIGEN VERBRENNUNGSMOTORS**
METHOD AND DEVICE FOR COORDINATING THE FILLING OF A CYLINDER IN A MULTICYLINDER INTERNAL COMBUSTION ENGINE
PROCEDE ET DISPOSITIF DE COORDINATION DU REMPLISSAGE DES CYLINDRES D'UN MOTEUR A COMBUSTION INTERNE A PLUSIEURS CYLINDRES

(30) Priorität: 26.11.2001 DE 10157616; 26.11.2001 US 333351 P
(43) Veröffentlichungstag der Anmeldung: 25.08.2004
(73) Patentinhaber: INA-Schaeffler KG, 91074 Herzogenaurach (DE)
(72) Erfinder: GRAU, Ulrich, 91448 Emskirchen (DE)
(86) Internationale Anmeldenummer: PCT/EP2002/011733
(87) Internationale Veröffentlichungsnummer: WO 2003/046355

(56) Entgegenhaltungen:
- EP-A- 0 833 043
- DE-A- 2 535 845
- DE-A- 3 531 000
- DE-A- 19 859 018
- US-A- 2 410 660
- US-A- 2 934 052
- US-A- 4 714 057
- US-A- 5 127 384

## Beschreibung

### Gebiet der Erfindung

Die Erfindung betrifft ein Verfahren und eine Vorrichtung zum Gleichstellen der Füllung der Zylinder eines mehrzylindrigen Verbrennungsmotors, insbesondere nach dem Oberbegriff der Patentansprüche 1 und 8.

### Hintergrund der Erfindung

In der DE 100 06 018 A1 ist ein mehrzylindriger Verbrennungsmotor offenbart, der einen vollvariablen, mechanischen Ventiltrieb aufweist, mit einer den Ventilhub sämtlicher Einlassventile einer Zylinderbank steuernden Verstellwelle, die zusammen mit ihrem drehfest verbundenen Verstellnocken durch einen elektromechanischen Aktuator verdrehbar ist.

Bei Verbrennungsmotoren mit vollvariablem, mechanischem Ventiltrieb ergeben sich im niedrigen Leerlauf Ventilhübe von wenigen zehntel Millimetern. Fertigungstoleranzen der Ventiltriebskomponenten wirken sich deshalb relativ stark aus und führen zu relativ unterschiedlichen Ventilhüben. Diese führen vor allem im niedrigen Leerlauf und im leerlaufnahen Drehzahl- und Lastbereich zu teilweise erheblichen Füllungsunterschieden zwischen den Zylindern und dadurch zu einem unruhigen Motorlauf.

Füllungsunterschiede, die durch Ventilhubunterschiede von wenigen hundertstel Millimetern verursacht werden, sind schon spürbar. Erschwerend kommt hinzu, dass PKW-Insassen eine Drehungleichförmigkeit und Drehzahischwankungen des Motors im niedrigen Leerlauf aufgrund der fehlenden Fahrgeräusche deutlich registrieren können. Glücklicherweise steigt jedoch mit steigender Motordrehzahl und Motorlast auch der dafür erforderliche optimale Einlassventilhub rasch an. Dadurch nimmt knapp oberhalb der Leerlaufdrehzahl und bei mittleren Motorlasten eine Ventilhubabweichung kaum noch Einfluss auf die Laufruhe des Motors.

Eine Möglichkeit, die Toleranzen der Ventilhübe in den Griff zu bekommen besteht auch in einer Zusortierung von Ventiltriebskomponenten in unterschiedliche Toleranzgruppen. Dieser Weg ist jedoch mit erheblichem Aufwand bei der Montage der Zylinderbänke verbunden. Das gleiche gilt für die Verwendung von Einstellvorrichtungen und Ausgleichselementen zum Ausgleichen von Toleranzen.

### Aufgabe der Erfindung

Der Erfindung liegt deshalb die Aufgabe zu Grunde, für einen gattungsgemäßen Verbrennungsmotor mit vollvariablem mechanischen Ventiltrieb ein Verfahren zur Vermeidung von füllungsbedingten Drehungleichförmigkeiten, insbesondere im niedrigen Leerlauf und im leerlaufnahen Last- und Drehzahlbereich des Motors zu schaffen.

### Zusammenfassung der Erfindung

Die Aufgabe wird durch die Merkmale des Patentanspruchs 1 gelöst. Die Erfassung der füllungsabhängigen Motordaten bei laufendem Motor hat den Vorteil, dass auch erst im Laufe des Motorbetriebs sich zeigende Einflüsse von beispielsweise Verschleiß oder temperaturbedingten Längenänderungen der Steuerungsteile oder sogar steuerungsfremde Einflüsse wie Saugrohrschwingungen, erfasst und beim Ausregeln der Füllung der Zylinder mit berücksichtigt werden können. Durch entsprechend schnelle Steuergeräte werden die Daten sofort verarbeitet und in Stellbewegungen des elektromechanischen Aktuators umgesetzt. Durch dessen zylinderselektives und öffnungsphasengetreues Verdrehen der Verstellwelle wird die Gleichstellung der Füllung der Zylinder einer Zylinderbank über die Zeitquerschnitte der Einlassventile geregelt.

Das Problem einer raschen Verstellung der Verstellwelle wird dadurch entschärft, dass die toleranzbedingte Drehungleichförmigkeit des Motors in erster Linie im Bereich des Leerlaufs auftritt.

Vorteilhaft sind auch die bei diesen Betriebspunkten verkürzten Öffnungszeiten der Einlassventile mit entsprechend großen Ruhephasen dazwischen.

Die Abweichungen der Ventilhübe von einem Sollwert können auch vor Inbetriebnahme des Motors an einer montierten Zylinderbank mit einer geeigneten Vorrichtung gemessen werden. Die gemessenen Abweichungen können in dem Steuergerät des Ventiltriebs oder im zentralen Motorsteuergerät als Kennfeld hinterlegt werden. Im Motorbetrieb erfolgt dann die zylinderselektive Korrektur der Toleranzen auf Basis dieses Kennfeldes. Bei dieser Methode ist nur eine Steuerung der Füllung der Zylinder möglich. Eine Regelung, die auch während des Motorbetriebs eintretende Veränderungen berücksichtigt, lässt sich hierbei nicht verwirklichen.

Die erfindungsgemäße Regelung der Füllung der Zylinder lässt sich ohne zusätzlichen mechanischen Bauaufwand realisieren. Das Steuergerät muss lediglich mit zusätzlichen Funktionen und ggf. mit einer erhöhten Rechnerleistung ausgestattet und die Leistungsfähigkeit des Verstellmotors etwas erhöht werden.

insgesamt ergeben sich jedoch Kosten- und Funktionsvorteile gegenüber mechanischen Toleranzausgleichsverfahren wie die Zupaarung der Bauteile.

Die erhöhte Laufruhe des Motors bietet in jedem Fall den Vorteil von Kostensenkungen bei der Motorperipherie. Dies gilt z. B. bei einem Zweimassenschwungrad oder bei der Motoraufhängung und der Geräuschdämmung.

Bei der Fertigung sind Einsparungen durch gröbere Toleranzen der Ventiltriebskomponenten möglich, da diese Toleranzen durch die Füllungsregelung ausgeglichen werden können.

Von Vorteil ist auch, dass zur Beurteilung der Füllung der einzelnen Zylinder beispielsweise die Drehungleichförmigkeit oder der Lambdawert in Verbindung mit der Einspritzmenge bzw. Einspritzdauer des Kraftstoffs oder das Signal eines Klopfsensors dienen können, also auf vorhandene Sensorsignale zugegriffen werden kann. Die Drehungleichförmigkeit ist eine Folge unterschiedlich schnell ablaufender Arbeitstakte, die beispielsweise an Markierungen am Umfang des Schwungrades ablesbar ist. Eine hochauflösende Lambdasonde gestattet in Verbindung mit kalibrierten Einspritzdüsen Rückschlüsse auf die Füllung der einzelnen Zylinder. Ein Klopfsensor ermöglicht über eine Körperschallmessung die Bestimmung der Öffnungszeit der Einlassventile.

Die Drehungleichförmigkeit führt zur Korrektur der Füllung der einzelnen Zylinder, weil in dem Steuergerät durch entsprechende Software auf Basis von Laufzeitunterschieden der Arbeitstakte der einzelnen Zylinder Anpassungskurven generiert werden, die von dem Aktuator zylinderselektiv und öffnungsphasengetreu nachgefahren werden und die über die Verstellwelle zu entsprechenden Korrekturen der Zeitquerschnitte der einzelnen Einlassventile und damit der Füllung der einzelnen Zylinder führen.

Eine besonders präzise Korrektur der Füllungswerte wird dadurch erreicht, dass die Gleichstellung der Füllung der einzelnen Zylinder in bestimmten Schritten und über eine größere Anzahl von Arbeitszyklen erfolgt, bis schließlich die Abweichungen unterhalb einer festgelegten Grenzschwelle liegen.

Eine besonders rasche Korrektur der Füllungswerte wird dadurch erreicht, dass der Ausgleich der füllungsbedingten Laufzeit Unterschiede der Arbeitstakte der einzelnen Zylinder durch Anpassungswerte erfolgt, die in einem Kennfeld des Steuergeräts in Abhängigkeit von beispielsweise dem Laufzeitunterschied abgelegt sind.

Für einen Betrieb mit optimaler Korrektur der Füllung ist es von Vorteil, dass die zuletzt benutzten Anpassungswerte beim Abstellen des Motors in einen nicht flüchtigen Speicher des Steuergeräts abgelegt werden und für den nächsten Motorstart verfügbar sind.

Optimale Anpassung der Füllung auch in extremen Betriebszuständen wird dadurch erreicht, dass Anpassungswerte für Betriebszustände wie Kalt- und Heißstart sowie Kalt- und Heißbetrieb des Motors in einem Kennfeld des Steuergeräts abgespeichert sind.

Die zur Durchführung der Verfahrens erforderliche Vorrichtung zeichnet sich dadurch aus, dass ein Steuergerät vorgesehen ist, das über eine erste elektrische Leitung mit einem Geber für zylinderfüllungsrelevante Signale des Verbrennungsmotors und über eine zweite elektrische Leitung mit einem Antriebsmotor des Aktuators in Verbindung steht.

Üblicherweise ist für einen Vierzylindermotor eine einzige Verstellwelle mit dem sich verstellenden Aktuator vorgesehen. Bei einem Sechs- oder Zwölfzylindermotor kann es mit Blick auf eine Zylinderabschaltung sinnvoll sein, Gruppen von drei Zylindern mit je einer eigenen Verstellwelle und einem dazugehörigen Aktuator zu versehen, die abwechselnd in Aktion treten. Dadurch kann jeweils die Hälfte der Zylinder durch Nullhubeinstellung abgestellt werden, trotzdem würden alle Zylinder betriebswarm bleiben.

### Kurze Beschreibung der Zeichnungen

Weitere Merkmale der Erfindung ergeben sich aus der nachfolgenden Beschreibung und der Zeichnung, in der Ausführungsbeispiele der Erfindung schematisch dargestellt sind.

Es zeigen:
- Figur 1a: eine Seitenansicht eines elektromechanischen Aktuators in Achsrichtung der Verstellwelle gesehen;
- Figur 1b: eine Seitenansicht des Aktuators von Figur 1 a, jedoch quer zur Verstellwelle gesehen und mit einem Schaltschema einer Vorrichtung zur Gleichstellung der Füllung der Zylinder;
- Figur 2: ein Diagramm mit Kurbelwellensignalen von Zündzeitpunkten in der Zündfolge eines Vierzylindermotors;
- Figur 3: eine zu dem Diagramm von Figur 2 passende Ausgleichskurve für den Aktuator zum Korrigieren des Ventilhubs der Einlassventile eines Vierzylindermotors;
- Figur 4: ein Programmablaufplan für die Prozedur des elektromechanischen Toleranzausgleichs der Füllung der Zylinder.

### Ausführliche Beschreibung der Zeichnungen

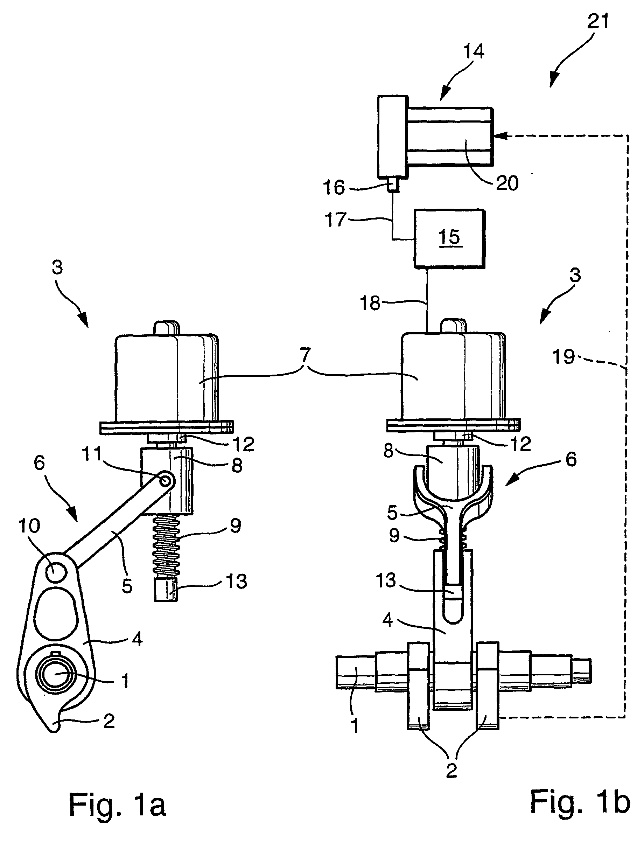

Die Figuren 1a und 1b zeigen eine Verstellwelle 1 mit Verstellnocken 2 für einen nicht dargestellten vollvariablen, mechanischen Ventiltrieb eines mehrzylindrigen Verbrennungsmotors 14 und einen elektromechanischen Aktuator 3 für die Verstellwelle 1.

Der Aktuator 3 weist einen Verstellhebel 4, einen Gabelhebel 5, einen Spindeltrieb 6 und einen Elektromotor 7 auf. Der Spindeltrieb 6 besteht aus einer Spindelmutter 8 mit einer darin geführten Gewindespindel 9.

Der Verstellhebel 4 ist mit der Verstellwelle 1 verdrehfest verbunden. Das gegabelte Ende des Verstellhebels 4 steht über einen Lagerbolzen 10 mit dem Gabelhebel 5 in Verbindung.

Der Gabelhebel 5 und die Spindelmutter 8 weisen zwei sie gelenkig verbindende andere Lagerbolzen 11 mit einer gemeinsamen Achse auf, die durch die Mitte und die Achse der Spindelmutter 8 verläuft. Auf diese Weise ist die Spindelmutter 8 gegen Verdrehen gesichert.

Die Gewindespindel 9 und eine Elektromotorenwelle 12 sind einstückig ausgebildet. Dadurch entfällt eine sonst erforderliche Kupplung zwischen Gewindespindel 9 und Elektromotorwelle 12, wodurch sich eine kompakte, steife und einfache Bauform des Aktuators 3 ergibt.

Die Elektromotorwelle 12 weist zwei Lager und die Gewindespindel 9 ein zusätzliches Stützlager 13 auf. Letzteres ist wegen der von dem Gabelhebel 5 über die Spindelmutter 8 auf die Gewindespindel 9 übertragenen hohen Querkräfte erforderlich. Alle drei Lager sind zylinderkopffest angeordnet, eines davon ist als Festlager ausgebildet.

Zur Minimierung des Spiels im Spindeltrieb kann dieser vorgespannt ausgeführt werden. Die Vorspannung kann z. B. durch Wälzkörper mit Übermaß erreicht werden.

Die geringe Reibung des Aktuators erlaubt die Verwendung eines drehmomentschwachen Elektromotors 7, der das Bordnetz nur gering belastet.

Das Übersetzungsverhältnis zwischen dem Elektromotor 7 und der Verstellwelle 1 ist durch die Länge des Verstellhebels 4 und des Gabelhebels 5 sowie durch die Steigung und Anstellung der Gewindespindel 9 bestimmt. Mit diesen relativ einfachen und damit kostengünstigen mechanischen Bauelementen kann ein hohes Untersetzungsverhältnis zwischen dem Elektromotor 7 und der Verstellwelle 1 erzielt werden. Dies gilt besonders für die Endphase der Verstellbewegung, in welcher der Gabelhebel 5 in etwa senkrecht zur Gewindespindel 9 steht und dabei ein hohes Übersetzungsverhältnis bewirkt und gleichzeitig ein niedriges Antriebsmoment erfordert.

Der Aktuator 3 kann in beliebiger Längs- und Winkellage an der Verstellwelle 1 angebaut und so den Einbaubedingungen des Verbrennungsmotors 14 angepasst werden.

Der Aktuator 3 zeichnet sich durch einfache, steife und kompakte Bauweise aus. Er erreicht durch geringes Spiel hohe Positioniergenauigkeit und durch geringe Reibung hohe Verstellgeschwindigkeit bei niedriger Bordnetzbelastung.

Er ist dadurch in besonderer Weise für eine Vorrichtung 21 zur Verwirklichung eines Verfahrens zum Gleichstellen der Füllung der einzelnen Zylinder des in Figur 1b dargestellten mehrzylindrigen Verbrennungsmotors 14 geeignet. Die Vorrichtung 21 benötigt zusätzlich zu dem vorhandenen Aktuator 3 lediglich ein Steuergerät 15, das über eine erste elektrische Leitung 17 mit einem die Drehungleichförmigkeit der Kurbelwelle. messenden Geber 16 und über eine zweite elektrische Leitung 18 mit dem Elektromotor 7 des Aktuators 3 verbunden ist. Die bei eingebautem Aktuator 3 ohnehin vorhandene Wirkverbindung zwischen den Verstellnocken 2 und dem variablen, mechanischen Ventiltrieb 20 ist durch eine gestrichelte Linie 19 angedeutet.

Das Steuergerät 15 kann Teil eines zentralen Motorsteuergeräts, in dieses integriert sein, oder eines speziellen Steuergeräts der Vorrichtung 21 sein. Ggf. müssen deren Rechnerkapazität und Funktionsumfang erhöht werden.

Der apparative Mehraufwand für die Vorrichtung reduziert sich auf den Geber 16 (zum Teil bereits vorhanden) und eventuell auf einen leistungsfähigeren Elektromotor 7. Es werden keinerlei zusätzliche mechanische Bauteile benötigt.

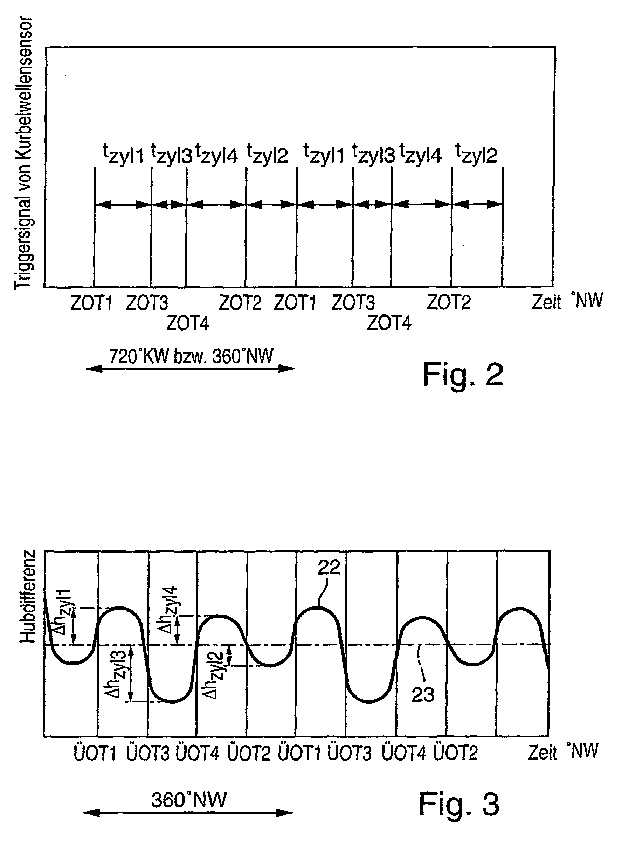

Die Drehungleichförmigkeit der Kurbelwelle des Verbrennungsmotors 14 ist in einem Diagramm der Figur 2 dargestellt und zwar auf einer Zeitachse in Grad Nockenwinkel als unterschiedlicher zeitlicher Abstand der Trägersignale bzw. Zündzeitpunkte ZOT eines Vierzylinder-Viertaktmotors in dessen Zündfolge 1-3-4-2. Der zeitliche Abstand der Zündzeitpunkte ZOT entspricht der Zeitdauer der jeweiligen Arbeitstakte, die von der Füllung der einzelnen Zylinder abhängt. Kurze Arbeitstaktzeiten entsprechen einer hohen Füllung mit rasanter Verbrennung, lange einer geringen Füllung mit schleppender Verbrennung.

In Figur 3 ist ein Diagramm dargestellt, das auf das Diagramm von Figur 2 abgestimmt ist. Auf der Abszisse sind in Grad Nockenwinkel die Überschneidungstotpunkte ÜOT der Zylinder in der Zündfolge 1-3-4-2 des Vierzylinder-Viertaktmotors aufgezeichnet. Auf der Ordinate sind die Hubdifferenzen der Einlassventilhübe gegenüber einer Linie 23 aufgetragen, die den gemittelten Einlassventilhub für den jeweils aktuellen Betriebszustand darstellt. Zwischen den Überschneidungstotpunkten ÜOT sind Ausgleichskurven 22 dargestellt, die durch entsprechende Auswertung der Gebersignale in Verbindung mit entsprechender Software auf Basis der unterschiedlichen Arbeitstaktzeiten im Steuergerät 15 generiert wurden. Die Ausgleichskurven 22 wirken den toleranzbedingten Füllungsunterschieden durch Ventilhubkorrekturen entgegen. Sie überschreiten bei Zylindern mit zu geringer Füllung die Linie 23 (gleich Ventilhubvergrößerung) und unterschreiten dieselbe bei Zylindern mit zu hoher Füllung (gleich Ventilhubverkleinerung).

Die Ausgleichskurven 22 werden von dem Aktuator 3 phasengerecht nachgefahren. So wird der jeweilige Ventilhub und die damit verbundene Einlassdauer angepasst. Dabei ist für eine gleichmäßige Füllung weniger der gleiche Ventilhub als vielmehr der gleiche Zeitquerschnitt der Einlassventile ausschlaggebend.

Es ist auch möglich, die Werte der Ausgleichskurven 22 stufenweise zu erreichen, was in bestimmten Schritten über eine größere Folge von Arbeitsspielen solange erfolgen kann, bis schließlich die Laufzeitunterschiede der Arbeitstakte der einzelnen Zylinder unterhalb einer festgelegten Grenzwertschwelle liegen.

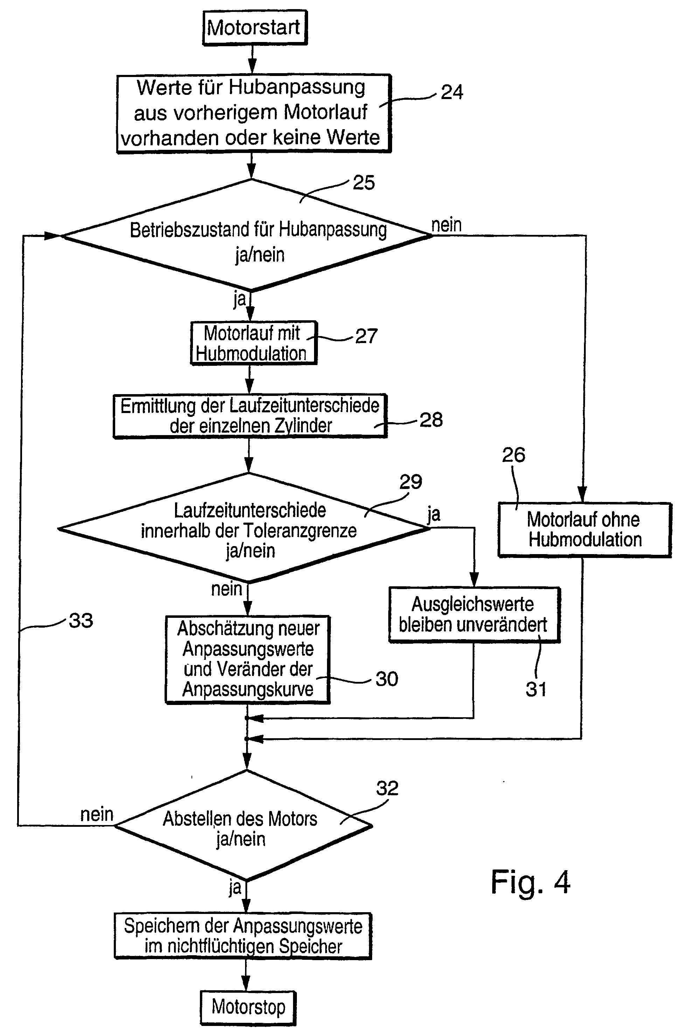

Das in Figur 4 dargestellte Ablaufdiagramm bezieht sich ausschließlich auf die Routine, die den elektromechanischen Toleranzausgleich regelt. Weitere Motorsteuergerätefunktionen für z. B. Gemischaufbereitung, Fahrerwunschauswertung, Abgasnachbehandlung etc. laufen dabei parallel ab und sind im Ablaufdiagramm nicht dargestellt.

Nach dem Motorstart wird durch eine Prozedur (Position 24) überprüft, ob aus vorangegangen Motorläufen Ausgleichswerte für den elektromechanischen Toleranzausgleich (im Folgenden kurz EMT genannt) vorhanden sind. Falls keine Werte vorliegen, wird mit Standardwerten, z. B. Null, gestartet.

Dann wird überprüft, ob die aktuelle Motordrehzahl und der Betriebszustand für den EMT vorgesehen sind (Position 25). Der Verbrennungsmotor wird ohne EMT z. B. bei Motordrehzahlen oberhalb einer Grenzdrehzahl oder im Schubbetrieb (bei Schubabschaltung) gefahren (Position 26). Liegt ein sinnvoller Betriebsbereich vor, werden die Ausgleichskurven durch den Aktuator umgesetzt (Position 26). Ist dies nicht der Fall, findet keine zylinderselektive Ventilhubmodulation statt (Position 27).

Während des Laufs mit EMT werden durch das Steuergerät und geeignete Algorithmen die Gleichlaufschwankungen zwischen den einzelnen Zylindern ermittelt (Position 28). Falls diese außerhalb einer gewissen Toleranzgrenze liegen (Position 29), erfolgt eine Adaption der Anpassungswerte und eine entsprechende Veränderung der Anpassungskurve (Position 30), die durch den Aktuator beim nächsten Durchlauf der Schleife nachgefahren werden soll. Liegen die Laufzeit- bzw. Füllungsunterschiede innerhalb der Toleranzgrenze, bleiben die Werte unverändert (Pfad siehe Position 31).

Falls der Motor abgestellt wird (Position 32), werden die Ausgleichwerte für die jeweiligen Zylinder in einem nicht flüchtigen Speicher des Motorsteuergerätes abgelegt. Andernfalls wird die Schleife neu durchlaufen (Pfad siehe Position 33).

### Bezugszahlen

- 1: Verstellwelle
- 2: Verstellnocken
- 3: elektromechanischer Aktuator
- 4: Verstellhebel
- 5: Gabelhebel
- 6: Spindeltrieb
- 7: Elektromotor
- 8: Spindelmutter
- 9: Gewindespindel
- 10: Lagerbolzen
- 11: anderer Lagerbolzen
- 12: Elektromotorwelle
- 13: Stützlager
- 14: Verbrennungsmotor
- 15: Steuergerät .
- 16: füllungsrelevanter Geber
- 17: erste elektrische Leitung
- 18: zweite elektrische Leitung
- 19: Wirkverbindung
- 20: vollvariabler, mechanischer Ventiltrieb
- 21: Vorrichtung zur Gleichstellung der Füllung
- 22: Ausgleichskurve
- 23: Linie
- 24 bis 33: Position des Ablaufdiagramms

## Patentansprüche

1. Verfahren zum Gleichstellen der Füllung der Zylinder eines mehrzylindrigen Verbrennungsmotors (14), der einen vollvariablen, mechanischen Ventiltrieb (20) aufweist, mit einer den Ventilhub der Einlassventile einer Zylinderbank steuernden Verstellwelle (1), die zusammen mit ihrem drehfest verbundenen Verstellnocken (2) durch einen elektromechanischen Aktuator (3) verdrehbar ist, **dadurch gekennzeichnet, dass** füllungsabhängige Motordaten von einem Sensor (16) bei laufendem Motor (14) gemessen und in einem Steuergerät (15) mittels geeigneter Software zu Signalen verarbeitet werden, mit denen der Aktuator (3) die Verstellwelle (2) zylinderselektiv und öffnungsphasengetreu verdreht und dadurch den Hub bzw. Zeitquerschnitt der einzelnen Einlassventile und in deren Folge die Füllung der einzelnen Zylinder auf einem gewünschten Sollwert einregelt.

2. Verfahren nach Anspruch 1, **dadurch gekennzeichnet, dass** zur Beurteilung der Füllung der einzelnen Zylinder beispielsweise die Drehungleichförmigkeit oder der Lambdawert in Verbindung mit der Einspritzmenge bzw. Einspritzdauer des Kraftstoffs oder das Signal eines Klopfsensors dienen.

3. Verfahren nach Anspruch 2, **dadurch gekennzeichnet, dass** in dem Steuergerät (15) durch entsprechende Software auf Basis von Laufzeitunterschieden der Arbeitstakte der einzelnen Zylinder Anpassungskurven (22) generiert werden, die von dem Aktuator (3) zylinderselektiv und öffnungsphasengetreu nachgefahren werden und die über die Verstellwelle (1) zu entsprechenden Korrekturen der Zeitquerschnitte der einzeinen Einlassventile und damit der Füllung der einzelnen Zylinder führen.

4. Verfahren nach Anspruch 3, **dadurch gekennzeichnet, dass** die Gleichstellung der Füllung der einzelnen Zylinder in bestimmten Schritten und über eine größere Anzahl von Arbeitszyklen erfolgt, bis die Abweichungen unterhalb einer festgelegten Grenzschwelle liegen.

5. Verfahren nach Anspruch 4, **dadurch gekennzeichnet, dass** der Ausgleich der füllungsbedingten Laufzeitunterschiede der Arbeitstakte der einzelnen Zylinder durch festgelegte Anpassungswerte erfolgt, die in einem Kennfeld des Steuergeräts (15) abgelegt sind.

6. Verfahren nach Anspruch 5, **dadurch gekennzeichnet, dass** die zuletzt benutzten Anpassungswerte beim Abstellen des Motors (14) in einen nicht flüchtigen Speicher des Steuergeräts (15) abgelegt werden und für den nächsten Motorstart verfügbar sind.

7. Verfahren nach Anspruch 6, **dadurch gekennzeichnet, dass** Anpassungswerte für Betriebszustände wie Kalt- und Heißstart sowie Kalt- und Heißbetrieb des Motors (14) in einem Kennfeld des Steuergeräts (15) abgespeichert sind.

8. Vorrichtung zum Gleichstellen der Füllung der Zylinder eines mehrzylindrigen Verbrennungsmotors (14), insbesondere zur Durchführung des Verfahrens nach einem der Ansprüche 1 bis 7, wobei der Motor (14) einen vollvariablen, mechanischen Ventiltrieb (20) aufweist, mit einer den Ventilhub der Einlassventile einer Zylinderbank steuernden verstellwelle (1), die zusammen mit ihren drehfest verbundenen Verstellnocken (2) über einen elektromechanischen Aktuator (3) verdrehbar ist, **dadurch gekennzeichnet, dass** ein Steuergerät (15) vorgesehen ist, das über eine erste elektrische Leitung (17) mit einem Geber (16) für zylinderfüllungsrelevante Signale des Verbrennungsmotors (14) und über eine zweite elektrische Leitung (18) mit einem Antriebsmotor (7) des Aktuators (3) in Verbindung steht.

## Claims

1. Method for coordinating the filling of the cylinders of a multi-cylinder internal combustion engine (14) which has a fully variable, mechanical valve timing mechanism (20), having an adjusting shaft (1) which controls the valve stroke of the inlet valves of a cylinder bank and can be rotated together with its rotationally fixedly connected adjusting cam (2) by an electromechanical actuator (3), **characterized in that** motor data which are dependent on the filling are measured by a sensor (16) when the engine (14) is running and are processed to form signals in a controller (15) by means of suitable software, using which signals the actuator (3) rotates the adjusting shaft (1) in a cylinder-selective manner according to the opening phase and, as a result, controls the stroke or time cross section of the individual inlet valves and, as a consequence, the filling of the individual cylinders to a desired setpoint value.

2. Method according to Claim 1, **characterized in that**, for example, the rotational non-uniformity or the lambda value in conjunction with the injection amount or injection duration of the fuel or the signal of a knocking sensor serve to determine the filling of the individual cylinders.

3. Method according to Claim 2, **characterized in that** adaptation curves (22) are generated in the controller (15) by appropriate software on the basis of running-time differences in the working strokes of the individual cylinders, which adaptation curves (22) are followed by the actuator (3) in a cylinder-selective manner according to the opening phase and which lead via the adjusting shaft (1) to corresponding corrections of the time cross sections of the individual inlet valves and thus of the filling of the individual cylinders.

4. Method according to Claim 3, **characterized in that** the filling of the individual cylinders is coordinated in defined steps and over a relatively large number of working cycles, until the deviations lie below a stipulated threshold.

5. Method according to Claim 4, **characterized in that** the running-time differences, caused by the filling, of the working strokes of the individual cylinders are compensated for by stipulated adaptation values which are stored in a characteristic diagram of the controller (15).

6. Method according to Claim 5, **characterized in that** the adaptation values which were used last are stored in a non-volatile memory of the controller (15) when the engine (14) is switched off and are available for the next engine start.

7. Method according to Claim 6, **characterized in that** adaptation values for operating states such as cold and warm starting and also cold and warm operation of the engine (14) are stored in a characteristic diagram of the controller (15).

8. Apparatus for coordinating the filling of the cylinders of a multi-cylinder internal combustion engine (14), in particular for carrying out the method according to one of Claims 1 to 7, the engine (14) having a fully variable, mechanical valve timing mechanism (20), having an adjusting shaft (1) which controls the valve stroke of the inlet valves of a cylinder bank and can be rotated together with its rotationally fixedly connected adjusting cam (2) by an electromechanical actuator (3), **characterized in that** a controller (15) is provided which is connected via a first electrical line (17) to a sensor (16) for signals of the internal combustion engine (14) which are relevant to the cylinder filling, and via a second electrical line (18) to a drive motor (7) of the actuator (3).

## Revendications

1. Procédé de coordination du remplissage des cylindres d'un moteur (14) à combustion interne à plusieurs cylindres qui présente un mécanisme (20) de commande de soupapes à variabilité totale, avec un arbre de réglage (1) qui commande la course des soupapes d'admission d'un banc de cylindres et qui peut être mis en rotation, conjointement avec la came de réglage (2) qui lui est liée en rotation, par un actionneur électromécanique (3), **caractérisé en ce que** des données du moteur dépendantes du remplissage sont mesurées par un capteur (16) lorsque le moteur (14) tourne et sont, dans un appareil de commande (15) et au moyen de logiciels appropriés, transformées en signaux par lesquels l'actionneur (3) fait tourner l'arbre de réglage (1) d'une manière sélective pour chaque cylindre et dans le respect des phases d'ouverture et règle ainsi la course ou encore la section dans le temps des soupapes d'admission individuelles et par conséquent le remplissage des cylindres individuels à une valeur de consigne souhaitée.

2. Procédé selon la revendication 1, **caractérisé en ce que**, afin d'évaluer le remplissage des cylindres individuels, on utilise par exemple l'irrégularité de rotation ou la valeur lambda conjointement avec la quantité d'injection ou encore la durée d'injection de carburant, ou le signal d'un détecteur de détonation.

3. Procédé selon la revendication 2, **caractérisé en ce qu'**on génère dans l'appareil de commande (15), par des logiciels correspondants et sur la base de différences de durée d'exécution des phases de travail des cylindres individuels, des courbes d'adaptation (22) qui sont suivies par l'actionneur (3) d'une manière sélective pour chaque cylindre et dans le respect des phases d'ouverture et qui, par l'intermédiaire de l'arbre de réglage (1), engendrent des corrections correspondantes des sections dans le temps des soupapes d'admission individuelles et donc du remplissage des cylindres individuels.

4. Procédé selon la revendication 3, **caractérisé en ce que** la coordination du remplissage des cylindres individuels s'effectue par étapes données et sur un grand nombre de cycles de travail, jusqu'à ce que les écarts se situent en dessous d'un seuil limite fixé.

5. Procédé selon la revendication 4, **caractérisé en ce que** la compensation des différences de durée d'exécution, dépendantes du remplissage, des phases de travail des cylindres individuels s'effectue par des valeurs fixées d'adaptation qui sont enregistrées dans un diagramme caractéristique de l'appareil de commande (15).

6. Procédé selon la revendication 5, **caractérisé en ce que** les dernières valeurs d'adaptation utilisées sont, lors de l'arrêt du moteur (14), enregistrées dans une mémoire non volatile de l'appareil de commande (15) et disponibles pour le prochain démarrage du moteur.

7. Procédé selon la revendication 6, **caractérisé en ce que** des valeurs d'adaptation pour des situations de fonctionnement comme le démarrage à froid et à chaud ainsi que le fonctionnement à froid et à chaud du moteur (14) sont mémorisées dans un diagramme caractéristique de l'appareil de commande (15).

8. Dispositif de coordination du remplissage des cylindres d'un moteur (14) à combustion interne à plusieurs cylindres, notamment pour la mise en oeuvre du procédé selon l'une quelconque des revendications 1 à 7, sachant que le moteur (14) présente un mécanisme (20) de commande de soupapes à variabilité totale, avec un arbre de réglage (1) qui commande la course des soupapes d'admission d'un banc de cylindres et qui peut être mis en rotation, conjointement avec les cames de réglage (2) qui lui sont liées en rotation, au moyen d'un actionneur électromécanique (3), **caractérisé en ce qu'**il est prévu un appareil de commande (15) qui est relié par l'intermédiaire d'une première ligne électrique (17) à un capteur (16) de signaux du moteur (14) à combustion interne qui sont pertinents pour le remplissage des cylindres, et par l'intermédiaire d'une deuxième ligne électrique (18) à un moteur d'entraînement (7) de l'actionneur (3).
